# EUROPÄISCHE PATENTSCHRIFT

(11) **EP 1 206 997 B1**
(45) Veröffentlichungstag und Bekanntmachung des Hinweises auf die Patenterteilung: **29.03.2006**
(21) Anmeldenummer: 01127214.3
(22) Anmeldetag: 16.11.2001
(51) Int. Cl.: B23K 26/02

(54) **Laserbearbeitungsgerät mit Beobachtungseinrichtung**
Laser machining device with observation system
Appareil de traitement laser avec dispositif d'observation

(30) Priorität: 17.11.2000 DE 10057298
(43) Veröffentlichungstag der Anmeldung: 22.05.2002
(73) Patentinhaber: Carl Baasel Lasertechnik GmbH, D-82304 Starnberg (DE)
(72) Erfinder: BAUER, Wolfgang, 82110 Germering (DE); LANGHANS, Lutz, Dr., 82319 Starnberg (DE); RENNER, Thomas, Dr., 82538 Geretsried (DE)
(74) Vertreter: Mörtel & Höfner

(56) Entgegenhaltungen:
- EP-A- 0 491 192
- EP-A- 0 593 783
- DE-A- 19 828 723
- US-A- 5 670 068

## Beschreibung

Die Erfindung bezieht sich auf ein Laserbearbeitungsgerät, insbesondere ein Laserschweißgerät, mit einer Beobachtungseinrichtung zum Beobachten des Arbeitspunktes.

Bei der Bearbeitung eines Werkstückes mit einem Laserstrahl ist es erforderlich, den jeweiligen Arbeitspunkt am Werkstück korrekt im Fokus des von einer Fokussiereinheit fokussierten Laserstrahls anzuordnen. Insbesondere bei der manuellen Feinbearbeitung eines Werkstückes mit einem sogenannten Handschweißlasergerät, beispielsweise bei der Nachbearbeitung von Spritzgussformen durch Auftragsschweißen, wird zur korrekten Einstellung des Fokus und des Auftreffpunktes des Laserstrahles auf dem Werkstück ein Beobachtungsmikroskop verwendet. Die korrekte Positionierung des Werkstücks wird mit Hilfe eines höhenverstellbaren x-y-Tisches vorgenommen. Um auch Kanten bearbeiten zu können oder Arbeitspunkte auf Werkstückflächen zu erreichen, die senkrecht zur x-y-Ebene orientiert sind, muss auch die Ausbreitungsrichtung des fokussierten Laserstrahls relativ zum Werkstück, d. h. der Winkel, unter dem der Laserstrahl auf das Werkstück auftrifft, der jeweiligen Lage des Arbeitspunktes angepasst werden, so dass es zusätzlich erforderlich sein kann, das Werkstück relativ zur Fokussiereinheit zu verkippen.

Aus der DE 38 07 471 A1 ist eine Vorrichtung zum Führen eines Laserstrahles bekannt, bei der der Laserstrahl mit einem schwenkbaren Umlenkspiegel um zwei zueinander senkrechte Achsen geschwenkt werden kann, um bei der Bearbeitung von nichtebenen Werkstücken eine korrekte Ausrichtung des Winkels, mit dem der Laserstrahl auf das Werkstück auftrifft, zu ermöglichen. Auf diese Weise kann die Ausbreitungsrichtung des Laserstrahls im jeweiligen Arbeitspunkt senkrecht zur Oberfläche des Werkstücks ausgerichtet werden, ohne dass hierzu das gesamte Werkstück geschwenkt werden muss. Die Verwendung eines optischen Hilfsmittels zur Kontrolle der korrekten Positionierung des Laserstrahls auf dem Werkstück ist bei der bekannte Vorrichtung jedoch nicht vorgesehen.

Gemäß der JP-A-02 10 4488 ist die Fokussiereinheit um zwei Drehachsenschwenkbar.

Ein Laserbearbeitungsgerät mit einem Beobachtungsmikroskop ist beispielsweise aus der US 5,449,882 A bekannt. Bei diesem Laserbearbeitungsgerät ist hinter einem dichroitischen Spiegel ein feststehendes Beobachtungsmikroskop angeordnet, das eine Beobachtung des Werkstückes im Arbeitsbereich des Laserstrahls ermöglicht. Bei der bekannten Vorrichtung ist die Verwendung eines feststehenden Mikroskops ausreichend, da diese nur eine Linearverschiebung des Laserstrahls in einem relativ kleinen Arbeitsbereich ermöglicht, so dass der Fokus des Laserstrahls das feststehende Gesichtsfeld des Beobachtungsmikroskops nicht verlässt. Die Lage des Fokus des Laserstrahls ist außerdem erst dann erkennbar, wenn dieser auf das Werkstück auftrifft, so dass eine Korrektur der Fokuslage erst nach dem Beginn der Bearbeitung erfolgen kann.

Der Erfindung liegt nun die Aufgabe zugrunde, ein Laserbearbeitungsgerät, insbesondere ein Laserschweißgerät, anzugeben, das bei kompaktem Aufbau und mit einem relativ großen, vom Laserstrahl erfassbaren Arbeitsbereich eine präzise Positionierung und Ausrichtung des Laserstrahls auf das Werkstück noch vor dem Beginn der Bearbeitung ermöglicht.

Die genannte Aufgabe wird gemäß der Erfindung gelöst mit einem Laserbearbeitungsgerät mit den Merkmalen des Patentanspruches 1.

Da eine schwenkbare Fokussiereinheit vorgesehen ist, ist in einer Vielzahl von Anwendungsfällen ein Verkippen oder Schwenken des Werkstückes nicht mehr erforderlich. Vielmehr erfolgt die Ausrichtung des Laserstrahls durch Schwenken der Fokussiereinheit, die aufgrund der geringen bewegten Massen mechanisch unaufwendiger und präziser positioniert werden kann. Durch die Verwendung einer schwenkbaren Fokussiereinheit kann außerdem mit einer kleinen Fokussierlinse oder einem kleinen Fokussierspiegel ein großer Ablenkwinkel verwirklicht werden.

Da außerdem im Strahlengang des Laserstrahls zwischen der Laserstrahlquelle und der Fokussiereinheit ein dichroitischer Spiegel angeordnet ist, dem eine Beobachtungseinrichtung derart zugeordnet ist, dass deren optische Achse mit der Achse des sich in Ausbreitungsrichtung des Laserstrahls gesehen nach oder hinter dem dichroitischen Spiegel ausbreitenden Laserstrahls zusammenfällt, ist eine korrekte und präzise Positionierung des Werkstückes im Arbeitspunkt und Ausrichtung des Laserstrahls möglich. Durch die Verschränkung oder Überlagerung des Strahlenganges des Laserstrahls und der Beobachtungseinrichtung ist sichergestellt, dass der Fokus des Laserstrahls, d.h. der korrekte Arbeitspunkt, auch bei einer Veränderung der Ausrichtung des Laserstrahls stets in der Mitte des Gesichtsfeldes der Beobachtungseinrichtung, beispielsweise deckungsgleich mit einem eingeblendeten Fadenkreuz, liegt. Mit anderen Worten: Die Mitte des Gesichtsfeldes gibt zwangsläufig und automatisch den Auftreffpunkt des Laserstrahls auf dem Werkstück wieder. Die korrekte Position des Werkstückes ist dann gegeben, wenn der angewählte Arbeitspunkt auf der Werkstückoberfläche in der Beobachtungseinrichtung mittig und scharf eingestellt ist. Bereits vor dem Beginn der Bearbeitung, d. h. vor dem Einschalten der Laserstrahlquelle kann somit die Position des Fokus exakt auf den gewünschten Arbeitspunkt eingestellt werden.

Durch die Anordnung des dichroitischen Spiegels vor der schwenkbaren Fokussiereinheit, also in dem Abschnitt des Strahlenganges des Laserstrahls von der Laserstrahlquelle zur Fokussiereinheit, der innerhalb des Laserbearbeitungsgerätes räumlich feststehend ist, kann der schwenkbare Laserstrahl mit einer ebenfalls feststehenden Beobachtungseinrichtung beobachtet werden, wobei der durch die Schwenkbewegung erfassbare Arbeitsbereich des Laserstrahls größer sein kann als das Gesichtsfeld der Beobachtungseinrichtung. Da das Gesichtsfeld der Beobachtungseinrichtung automatisch und zwangsläufig der Schwenkbewegung des Laserstrahls folgt, kann je nach Anwendungsfall mit relativ hohen Vergrößerungen gearbeitet werden.

Weitere vorteilhafte Ausgestaltungen der Erfindung ergeben sich gemäß der Unteransprüche.

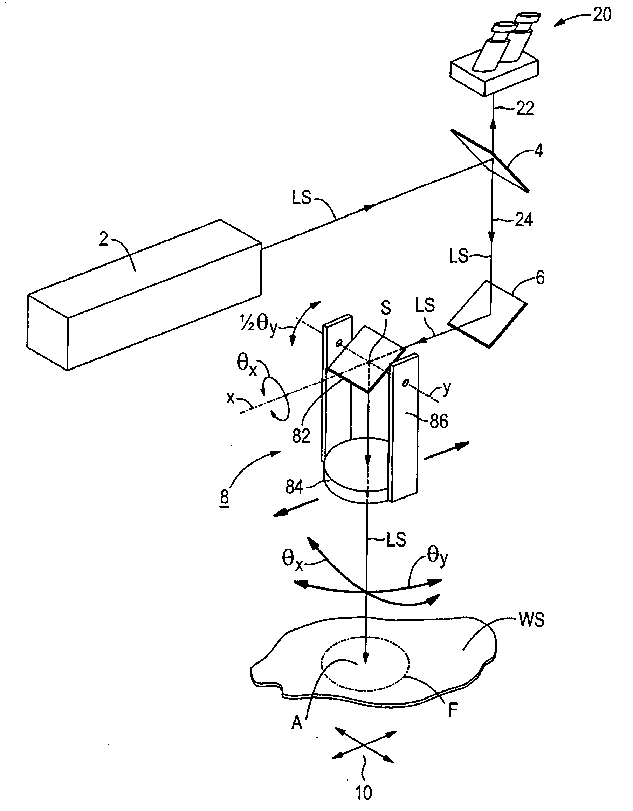

Zur weiteren Erläuterungen der Erfindung wird auf das Ausführungsbeispiel der Zeichnung verwiesen, deren einzige Figur ein erfindungsgemäßes Laserbearbeitungsgerät in einer schematischen perspektivischen Darstellung zeigt.

Gemäß der Figur umfasst das Laserbearbeitungsgerät eine Laserstrahlquelle 2, beispielsweise ein Nd:YAG-Festkörperlaser, die einen Laserstrahl LS erzeugt. Im Strahlengang des Laserstrahls LS ist ein dichroitischer (wellenlängenselektiver) Spiegel 4 angeordnet, der den Laserstrahl LS reflektiert, so dass dieser über einen weiteren Umlenkspiegel 6 zu einer schwenkbaren Fokussiereinheit 8 umgelenkt wird, die den Laserstrahl LS fokussiert. Der Strahlengang des Laserstrahles LS zwischen der Fokussiereinheit 8 und der Laserstrahlquelle 2 ist innerhalb des Laserbearbeitungsgerätes räumlich festgelegt.

Im Ausführungsbeispiel enthält die schwenkbare Fokussiereinheit 8 einen Umlenkspiegel 82 sowie eine optisch nachgeschaltete Fokussieroptik 84, im Ausführungsbeispiel eine Linse, mit der der Laserstrahl LS auf einem Werkstück WS fokussiert wird. Das Werkstück WS ist zur korrekten Positionierung in einer für die Laserbearbeitung erforderlichen Ausgangsstellung und zur Relativbewegung zwischen Laserstrahl LS und Werkstück WS während der Bearbeitung auf einem höhenverstellbaren Kreuztisch angeordnet, der in der Figur durch ein Achsenkreuz 10 nur symbolisch dargestellt ist.

Die schwenkbare Fokussiereinheit 8 ist kardanisch aufgehängt und um zwei Drehachsen, im Ausführungsbeispiel um zwei zueinander orthogonale Drehachsen x,y schwenkbar, so dass der fokussierte Laserstrahl LS um die Drehwinkel θₓ, θ_{y} geschwenkt werden kann. Eine der Drehachsen x,y, im Ausführungsbeispiel die Drehachse x, fällt mit der Achse des sich vom Umlenkspiegel 6 zur Fokussiereinheit 8 fortpflanzenden Laserstrahls LS zusammen. Die Drehachse y verläuft senkrecht hierzu. Die Drehachsen x,y schneiden sich in einem gemeinsamen Schnittpunkt S, der zugleich auch der Auftreffpunkt des Laserstrahles LS auf dem Umlenkspiegel 82 ist.

Eine Schwenkbewegung der Fokussiereinheit 8 bewirkt eine Schwenkbewegung des Laserstrahls LS in der Bearbeitungsebene um die Winkel θₓ,θ_{y}. Damit der Laserstrahl LS der Schwenkbewegung der Fokussiereinheit 8 um die Drehachse y folgt, ist es erforderlich, den Umlenkspiegel 82 entsprechend um den Winkel θ_{y}/2 zu kippen. Der Umlenkspiegel 82 muss somit um die Drehachse y um einen Winkel gekippt werden, der halb so groß ist wie der Schwenkwinkel θ_{y} der Fokussiereinheit 8. Innerhalb der Fokussiereinheit 8 ist deshalb der Umlenkspiegel 82 um die Drehachse y relativ zur Fokussiereinheit 8 und somit relativ zur innerhalb der Fokussiereinheit 8 feststehend eingebauten Fokussieroptik 84 drehbar gelagert. Dies ist in der Figur durch das schematisch dargestellte Schwenklager 86 veranschaulicht.

Hinter dem dichroitischen Spiegel 4 ist ein feststehendes binokulares Beobachtungsmikroskop 20 derart angeordnet, dass dessen optische Achse 22 mit der innerhalb des Laserbearbeitungsgerätes feststehenden optischen Achse 24 des vom dichroitischen Spiegel 4 umgelenkten, d. h. des sich in Ausbreitungsrichtung des Laserstrahls LS gesehen nach oder hinter dem dichroitischen Spiegel 4 ausbreitenden Laserstrahls LS zusammenfällt. Der dichroitische Spiegel 4 ist im Ausführungsbeispiel derart ausgebildet, dass er Licht im Bereich der Wellenlänge des Laserstrahls LS, im Beispiel 1064nm, reflektiert und Licht im sichtbaren Wellenlängenbereich durchlässt, so dass mit Hilfe des binokularen Beobachtungsmikroskops 20 das Werkstück WS im Bereich des Fokus oder Arbeitspunktes A des Laserstrahles LS beobachtet werden kann. Da der Strahlengang des Laserstrahls LS mit dem Strahlengang des Beobachtungsmikroskops 20 zusammenfällt, ist sichergestellt, dass bei einer Schwenkbewegung der Fokussiereinheit 8 mit dem Umlenkspiegel 82 und der Fokussieroptik 84 die Mitte des Gesichtsfeldes F des Beobachtungsmikroskops 20, die vorzugsweise durch ein eingeblendetes Fadenkreuz markiert ist, und der Schärfenbereich (Objektebene, die scharf abgebildet wird) stets mit dem Arbeitspunkt A zusammenfällt. Mit anderen Worten: Der Arbeitspunkt A ist dann korrekt im Fokus des Laserstrahls LS positioniert, wenn er in der Mitte des Gesichtsfeldes F des Beobachtungsmikroskops 20 scharf eingestellt ist.

Das Schwenken der Fokussiereinheit 8 um die Drehachsen x,y erfolgt manuell, um eine individuelle Einstellung des Auftreffwinkels und Auftreffpunktes des Laserstrahls LS auf dem Werkstück WS zu ermöglichen. Durch eine mit der Fokussiereinheit 8 gekoppelte Antriebsmechanik folgt der Umlenkspiegel 82 automatisch der Schwenkbewegung der Fokussiereinheit 8 um den jeweils korrekten Winkel θₓ, θ_{y}/2. Grundsätzlich ist es aber auch möglich, für das Schwenken der Fokussiereinheit motorische Antriebe zu verwenden und bei der Bearbeitung von Serien, d.h. einer Mehrzahl identischer Werkstücke WS, eine automatisierte Steuerung vorzunehmen. In diesem Fall dient das Beobachtungsmikroskop 20 lediglich zur Verfahrenskontrolle.

Anstelle des in der Figur dargestellten, für Licht im sichtbaren Wellenlängenbereich transparenten dichroitischen Spiegels ist grundsätzlich auch die Verwendung eines dichroitischen Spiegels möglich, der das Laserlicht transmittiert und Licht im sichtbaren Wellenlängenbereich reflektiert.

Ebenso kann anstelle eines feststehenden binokularen Beobachtungsmikroskops auch eine feststehende Videokamera vorgesehen sein, die eine Fernbedienung der Schwenkoptik ermöglicht.

### Bezugszeichenliste

- 2: Laserstrahlquelle
- 4: dichroitischer Spiegel
- 6: Umlenkspiegel
- 8: schwenkbare Fokussiereinheit
- 10: Achsenkreuz
- 20: Beobachtungsmikroskop
- 22,24: optische Achse
- 82: Umlenkspiegel
- 84: Fokussieroptik
- 86: Schwenklager

- LS: Laserstrahl
- WS: Werkstück
- F: Gesichtsfeld
- S: Schnittpunkt
- A: Arbeitspunkt
- x, y: Drehachsen
- θₓ, θ_{y}: Schwenkwinkel

## Patentansprüche

1. Laserbearbeitungsgerät, insbesondere Laserschweißgerät, mit einer Laserstrahlquelle (2) zum Erzeugen eines Laserstrahls (LS), und mit einer schwenkbaren Fokussiereinheit (8) zum Fokussieren des Laserstrahls (LS) in einem Fokus (F), und zum Schwenken des Laserstrahls (LS) um zwei sich in einem gemeinsamen Schnittpunkt (S) schneidende Drehachsen (x,y), **dadurch gekennzeichnet, dass** die Fokussiereinheit (8) einen Umlenkspiegel (82) enthält, der um eine der Drehachsen (y) derart relativ zur Fokussiereinheit (8) gelagert ist, dass er einer Schwenkbewegung der Fokussiereinheit um einen Drehwinkel (θy) mit einer Schwenkbewegung um den halben Drehwinkel (θy/2) folgt, und wobei im Strahlengang des Laserstrahls (LS) zwischen der Laserstrahlquelle (2) und der Fokussiereinheit (8) ein dichroitischer Spiegel (4) angeordnet ist, dem eine feststehende Beobachtungseinrichtung (20) derart zugeordnet ist, dass deren optische Achse (22) mit der Achse (24) des sich in Ausbreitungsrichtung des Laserstrahls (LS) gesehen nach dem dichroitischen Spiegel (4) ausbreitenden Laserstrahls (LS) zusammenfällt.

2. Laserbearbeitungseinrichtung nach Anspruch 1, mit einer kardanisch aufgehängten Fokussiereinheit (8).

## Claims

1. Laser machining device, in particular a laser welding device, having a laser beam source (2) for producing a laser beam (LS), and having a pivotable focussing unit (8) for focussing the laser beam (LS) at a focus (F) and for pivoting the laser beam (LS) about two rotation axes (x, y) intersecting at a common intersection point (S), **characterized in that** the focussing unit (8) includes a deflecting mirror (82) which is supported about a rotation axis (y) in such a way relative to the focussing unit (8) that it follows a pivoting movement of the focussing unit by a rotational angle (θy) with a pivoting movement by half the rotational angle (θy/2), and there being arranged in the beam path of the laser beam (LS) between the laser beam source (2) and the focussing unit (8) a dichroic mirror (4) which is assigned a stationary observation system (20) in such a way that the optical axis (22) of the latter coincides with the axis (24) of the laser beam (LS) propagating downstream of the dichroic mirror (4) when seen in the propagation direction of the laser beam (LS).

2. Laser machining device according to Claim 1, having a cardanically suspended focussing unit (8).

## Revendications

1. Appareil de traitement au laser, notamment appareil de soudage au laser, comprenant une source (2) de rayonnement laser de production d'un rayonnement (LS) laser et une unité (8) de focalisation, qui peut tourner pour focaliser le faisceau (LS) laser en un foyer (F) et pour faire tourner le faisceau (LS) laser autour de deux axes (x, y) de rotation se coupant en un point (S) d'intersection commun, **caractérisé en ce que** l'unité (8) de focalisation comprend un miroir (82) de déviation, qui est monté autour de l'un des axes (y) de rotation par rapport à l'unité (8) de focalisation de manière à ce qu'il suive un mouvement de rotation de l'unité de focalisation d'un angle (θy) de rotation par un mouvement de rotation de la moitié de l'angle (θy/2) de rotation et il est monté dans le trajet du rayonnement (LS) laser entre la source (2) de rayonnement laser et l'unité (8) de focalisation, un miroir (4) dichroïque auquel est associé un dispositif (20) fixe d'observation de sorte que son axe (22) optique coïncide avec l'axe (24) du faisceau (LS) laser se propageant après, tel que vu dans le sens de propagation du faisceau (LS) laser, le miroir (4) dichroïque.

2. Dispositif de traitement au laser selon la revendication 1, ayant une unité (8) de focalisation montée à la cardan.
